# EUROPEAN PATENT SPECIFICATION

(11) **EP 3 144 140 B1**
(45) Date of publication and mention of the grant of the patent: **27.08.2025**
(21) Application number: 15002696.1
(22) Date of filing: 17.09.2015
(51) Int. Cl.: B32B 7/12, B32B 27/08, B32B 27/30, B32B 27/32, B32B 27/34, B32B 27/36, C09J 7/29

(54) **CORROSION PROTECTION FILM**
KORROSIONSSCHUTZFILM
FILM DE PROTECTION CONTRE LA CORROSION

(43) Date of publication of application: 22.03.2017
(73) Proprietor: Amcor Flexibles Transpac, 9000 Gent (BE)
(72) Inventor: Bögels, Erik, 9000 Gent (BE); Christopherson, Roy, Swindon, SN6 8EY (GB); Ettridge, Peter, Worcester, Worcestershire WR3 8DA (GB)
(74) Representative: Vossius & Partner Patentanwälte Rechtsanwälte mbB

(56) References cited:
- EP-A1- 2 116 580
- WO-A1-2015/125751
- WO-A1-2015/129747
- WO-A1-2016/164535
- US-A1- 2006 141 247
- US-A1- 2007 231 571

## Description

This invention relates to a corrosion protection film arranged on metal substrates and which prevents corrosion of the surface of the metal substrate.

Corrosion is a ubiquitous problem for most metal or metal containing structures. In particular, if these structures are employed outside where said structures are exposed to high temperatures, high humidity or water due to changing weather conditions. Every year, corrosion causes damages and thus, costs in the range of billions. There are various possibilities to prevent or at least reduce corrosion, e.g., the application of corrosion inhibiting coatings or paints on the metal substrate which is to be protected. However, depending on the properties applying such coatings or paints requires the use of additional materials such as primers in order to achieve an acceptable adhesion of the desired corrosion inhibiting coating or paint. This renders the application of corrosion protection means more complex and expensive.

A well known class of corrosion inhibiting compounds are volatile corrosion inhibitors (VCI). Usually, the volatile corrosion inhibitor is integrated in a film from where it slowly migrates out into the air providing an anti-corrosive atmosphere around the metal product. The slowly released compounds actively prevent surface corrosion within a closed airspace. Such VCI comprising films may be wrapped around the metal object. They may also be employed on the inside of boxes or bags wherein metal products are stored. If used in bags the anti-corrosive atmosphere advantageously regenerates when a metal product is removed and the bag is closed again. This type of corrosion inhibitor is further used to protect materials against corrosion where it is impractical to apply surface treatments, e.g. protective oils which have to be laboriously removed once the metal product is further processed.

Other corrosion inhibitors used in coatings for a long time, e.g., zinc oxide, are restricted in their use because these inhibitors are material specific. Zinc oxide is specifically useful for steel surfaces but does not work on copper surfaces.

In other corrosion protection applications such as coil coatings specific machinery is required to achieve the coating of so called aluminium or steel coils. Continuous coil coating processes have been known for a long time, but many of the coil-coating formulations are based on "active" corrosion inhibiting compounds. "Active" corrosion inhibiting compounds means that these compounds are consumed in the process of corrosion inhibition. Once the entire active compound is used up corrosion will proceed on the metal substrate that has been protected. Consequently, such coatings have to be repeatedly renewed if corrosion protection is to be upheld. A widely used example for such an "active" corrosion inhibiting substance is zinc.

EP 2116580 discloses a surface protection sheet, suitable to be attached to the surface of metal plates. The sheet comprises a) a base material layer containing a thermoplastic resin, such as ethylene-vinyl alcohol, having a thickness of 20-250 µm; b) a pressure-sensitive adhesive layer provided on one side of the base material layer, and c) a backside treatment layer provided on another side of the base material layer and containing a polyethylene-based resin.

WO 2015/129747 discloses a metal laminating film 100, the metal adhesive resin layer 110, the polyolefin resin layer 120, the adhesive resin layer 130, the barrier resin layer 140, and the heat welding resin layer 150 are laminated from the metal plate 210 side in this order. The total thickness of the metal laminating film 100 is, between 20 µm and 400 µm. In an example a metal laminating film having a layer structure of ionomer / PE / adhesive / ethylene-vinyl alcohol is disclosed, wherein the thickness of the ethylene-vinyl alcohol barrier resin layer is 10 µm.

Therefore, there is a need for alternative corrosion protection means providing a sustained corrosion protection and simple applicability to the desired metal substrate. It is the object of the present invention to provide a corrosion protection mean that provides a long lasting corrosion protection and simple applicability.

The object is achieved by a corrosion protection film according to the present invention as defined in claim 1. Further preferred embodiments are subject to the dependent claims.

The term "polymeric material" as used herein comprises organic polymers as well as inorganic polymers.

A corrosion protection film according to the present invention has a multilayer structure according to claim 1. Further aspects of the invention are disclosed in dependent claims 2-5.

The corrosion protection film adhesively bonds to the metal substrate through the adhesive layer while the encapsulation layer being on the opposite side of the corrosion barrier layer as the adhesive layer delimits the outer side of the corrosion protection film.

A corrosion protection film according to the present invention can advantageously be applied to a metal substrate in a roll-to-roll process. A Coil coating line as used in coil coating processes is not necessary. The corrosion protection film provides a permanent passive corrosion protection and therefore does not simply delay the onset of corrosion as "active" corrosion protection means do. "Active" corrosion protection additives, e.g. zinc or volatile corrosion inhibitors lose their effectiveness once these compounds are consumed. In addition, a corrosion protection film according to the present invention is not restricted to specific metals such as steel.

In a preferred embodiment there is a tie layer arranged between the adhesive layer and the corrosion barrier layer and/or between the corrosion barrier layer and the encapsulation layer. Preferably, there are tie layers between the adhesive layer and the corrosion barrier layer and also between the corrosion barrier layer and the encapsulation layer.

According to the present invention, the corrosion barrier layer comprises a polar polymer, wherein the polar polymer is an ethylene vinylalcohol copolymer (EVOH).

Outside the scope of the invention, the polar polymer may be selected from the group consisting of polyvinyl alcohol (PVOH), polyamide (PA), polyvinylidene chloride (PVDC), oriented polyethylene terephtalate (oPET), polyethylene terephtalate glycol modified (PETg) and polyethylene naphtalate (PEN). Further suitable barrier polymers are fluorinated polymers such as polyvinylidene fluoride (PVDF), polyvinyl fluoride (PVF), polyethylenetetrafluoroethylene (ETFE), polyethylenechlorotrifluoroethylene (ECTFE), polytetrafluoroethene (PTFE), fluorinated ethylene-propylene (FEP), and polychlorotrifluoroethylene (PCTFE). Outside the scope of the invention, the corrosion protection layer comprises a compound selected from the group consisting of PVOH, PA, oriented polyethylene terephtalate (oPET), PVDC and PEN.

In a preferred embodiment, the corrosion barrier layer comprises a compound which is selected from the group consisting of cyclo-olefin copolymer (COC), aluminium oxide (AlOₓ). In the context of the present invention, AlOₓ refers to oxides of aluminum having the formula Al_{y}O_{z} where the ratio y/z is a number from 0.2 to 1.5. Preferably, y is 2 and z is 3.

The resulting coating of the present invention is transparent (or optical clear).

In the context of the present invention, oxides of silicon are referred to as SiOₓ where x is a number from 1 to 2, preferably from 1.5 to 1.8 (i.e. SiOₓ in which 1 ≤ x ≤ 2, preferably in which 1.5 ≤ x ≤ 1.8). Barrier compounds that comprise the compound SiOₓ are preferred owing to it's higher stability in corrosive environments compared to AlOₓ.

SiOₓ or AlOₓ layers may be achieved by coating a substrate via electron beam vacuum deposition. Preferably, the electron beam vacuum deposition is performed at a reduced pressure lower than 10⁻³ mbar with an applied voltage (to the electrons in the electron beam) of about 5 to about 40 kV.

EP 0 794 266 for example describes a method and device for coating a substrate surface with SiOₓ or AlOₓ by electron beam vacuum deposition, whereby the SiOₓ or AlOₓ is vaporized and deposited onto the surface of the substrate.

In a further embodiment the adhesive layer comprises an adhesive that is selected from the group consisting of ethylene acrylic acid copolymer (EAA), ethylene methacrylic acid copolymer (EMAA), an ionomer or a pressure sensitive adhesive. An ionomer which may be used is Surlyn^{®}. Pressure sensitive adhesives which may be used are acrylic pressure sensitive adhesives and silicone pressure sensitive adhesives.

In another embodiment the encapsulation layer of the corrosion protection film comprises a polymer. Said polymer is selected from the group consisting of polypropylene (PP), polyamide (PA) and polyethylene terephtalat (PET), PMMA, PVdF, PVF, ECTFE. The encapsulation layer preferably has a thickness in the range of 5 µm to 300 µm, more preferably in the range of 10 µm to 25 µm. The encapsulation layer may also be in the form of a coating based on fluoropolymers, polysiloxanes, silicones and acrylic acid. Encapsulation layers in the form of such coatings are advantageously resistant to environmental influences and protect the underlying structure from the elements when the structures are installed in exterior applications.

The preferred ranges of thickness regarding the barrier layer depend on the material of the barrier layer and the structure of the corrosion protection film. If the corrosion protection film has the form of a laminate, the barrier layer comprising or consisting of EVOH has a thickness in the range of preferably 1µm to 8 µm, more preferably in the range of 3µm to 8µm. Outside the scope of the invention the EVOH barrier layer has a thickness of 1 µm to 10 µm, or SiOₓ or AlOₓ layers form the barrier layer, these SiOₓ or AlOₓ layers have a thickness in the range of 20nm to 200nm, preferably in the range of 20nm to 100nm.

There are numerous methods for forming the corrosion protection film. The multi-layer film may be achieved by lamination. The lamination is done via tie layers comprising an adhesive. Extrusion lamination and also heat lamination are also feasible. A resulting reference structure may be as follows, PET/SiOx/adhesive/EAA. Another reference variant may have the structure PET/adhesive/oPA/adhesive/EAA. Whereby PET is the encapsulation layer, SiOx or oPA embodies the barrier layer and EAA which is a heat sensitive adhesive embodies the adhesive layer of the corrosion protection film.

A further embodiment of the corrosion protection film may have the structure PET/adhesive/EVOH film/adhesive/EAA.

A further possible way to form the corrosion protection film is for instance extrusion coating of a PET or oPP or oPA or another oriented polymer with PE/EVOH/EAA which results for example in the structure PET/PE/EVOH/EAA. In another embodiment the corrosion protection film according to the present invention is used on a metal surface for corrosion protection. The corrosion protection film can be used on many different metal substrates, e.g. steel, aluminium, copper and alloys thereof. The corrosion protection film can be applied to these metal substrates by way of a simple roll-to-roll process utilizing the heat adhesive properties of the multilayer film, or through the use of a pressure sensitive adhesive.

In a further embodiment, the corrosion protection film with its encapsulation layer could be adhered to the metal surface with a "wet" adhesive layer with for example, a two component polyurethane or expoxy adhesive, or through application of a pressure sensitive adhesive.

The corrosion protection film according to the present invention is explained in more detail below with reference to exemplary embodiments in the drawings, in which, purely schematically:
- Fig. 1: shows a cross-sectional view a first embodiment of the corrosion protection layer;
- Fig 2: shows a cross-sectional view of a second embodiment of the corrosion protection layer.

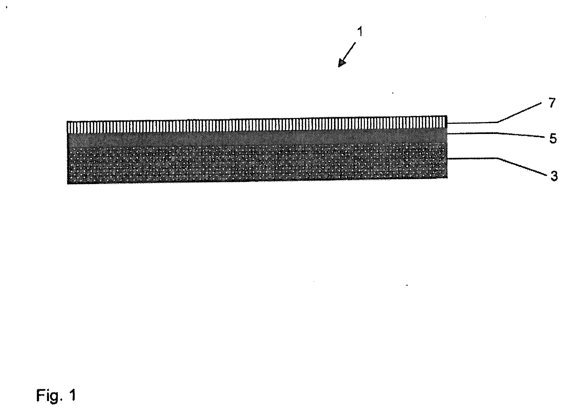

Figure 1 shows a cross-sectional view of a first embodiment of the corrosion protection film 1 according to the present invention. The film 1 is formed by three layers, an adhesive layer 3, a corrosion barrier layer 5 and an encapsulation layer 7. The corrosion film 1 is adhesively bonded to a metal substrate (not shown) via the adhesive layer 3. On top of the adhesive layer 3 the corrosion barrier layer 5 is arranged. On the side of the corrosion barrier layer opposite to the one contacting the adhesive layer, the encapsulation layer 7 is arranged. This means that the corrosion barrier layer 5 is sandwiched between the adhesive layer 3 and the encapsulation layer 7. This embodiment represents the minimal configuration of the corrosion protection film 1.

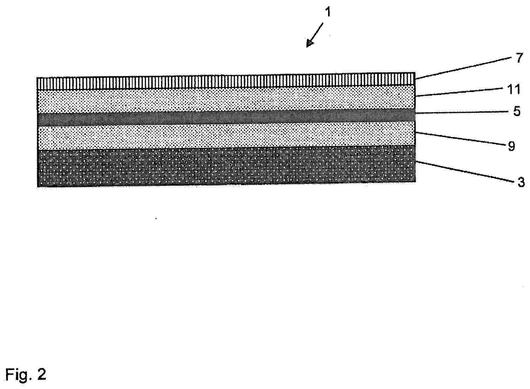

Figure 2 shows a cross-sectional view of a second embodiment of the corrosion protection film 1. On top of the adhesive layer 3 there is a tie layer 9 arranged which in turn contacts the corrosion barrier layer 5. A further tie layer 11 is arranged on top of the corrosion barrier layer 5. The outermost layer of the corrosion protection film 1 is the encapsulation layer 7. In this second embodiment the corrosion barrier layer 5 is arranged between the two tie layers 9 and 11. These two tie layer 9 and 11 bond the corrosion barrier layer 5 to the adhesive layer 3 and the encapsulation layer 7, respectively.

## Claims

1. Corrosion protection film having a multilayer structure capable of adhesively bonding to a metal surface and preventing corrosive ions from corroding said metal substrate and not utilizable for food packaging, comprising an adhesive layer, a corrosion barrier layer comprising a polymeric material, and an encapsulation layer, whereby the corrosion barrier layer comprises ethylene vinyl alcohol copolymer (EVOH), and whereby the corrosion barrier layer has a thickness in the range of 1 µm to 8 µm.

2. Corrosion protection film according to claim 1, whereby a tie layer is arranged between the adhesive layer and the corrosion barrier layer and/or between the corrosion barrier layer and the encapsulation layer.

3. Corrosion protection film according to any of claims 1 to 2, whereby the adhesive layer comprises at least one adhesive selected from the group consisting of ethylene acrylic acid copolymer (EAA), ethylene methacrylic acid copolymer (EMAA), ethylene vinyl acetate copolymer (EVA), an ionomer, an epoxy adhesive, a 2-component polyurethane adhesive, and a pressure sensitive adhesive.

4. Corrosion protection film according to any of claims 1 to 3, whereby the encapsulation layer comprises at least one polymer selected from the group consisting of polypropylene (PP), polyamide (PA), polyethylene (PE), and polyethylene terephthalate (PET), polyvinyl fluoride (PVF), polyvinylidene fluoride (PVdF), polyvinyl chloride (PVC), polyvinylidene chloride (PVdC), poly(methyl methacrylate) (PMMA), polyethylenetetrafluoroethylene (ETFE), and polyethylenechlorotrifluoroethylene (ECTFE).

5. Use of a corrosion protection film according to any of claims 1 to 4 on a metal surface for corrosion protection.

## Patentansprüche

1. Korrosionsschutzfilm mit einer Mehrschichtstruktur, der in der Lage ist, an einer Metalloberfläche zu haften und zu verhindern, dass korrosive Ionen das Metallsubstrat korrodieren, und der für Lebensmittelverpackungen nicht verwendbar ist, umfassend eine Haftschicht, eine Korrosionsschutzschicht, die ein polymeres Material umfasst, und eine Einkapselungsschicht, wobei die Korrosionsschutzschicht Ethylenvinylalkohol-Copolymer (EVOH) umfasst, und wobei die Korrosionsschutzschicht eine Dicke im Bereich von 1 µm bis 8 µm aufweist.

2. Korrosionsschutzfilm nach Anspruch 1, wobei zwischen der Haftschicht und der Korrosionsschutzschicht und/oder zwischen der Korrosionsschutzschicht und der Einkapselungsschicht eine Haftvermittlerschicht angeordnet ist.

3. Korrosionsschutzfilm nach einem der Ansprüche 1 bis 2, wobei die Haftschicht mindestens einen Klebstoff umfasst, der aus der Gruppe ausgewählt ist, die aus Ethylen-AcrylsäureCopolymer (EAA), Ethylen-Methacrylsäure-Copolymer (EMAA), Ethylen-Vinylacetat-Copolymer (EVA), einem Ionomer, einem Epoxyklebstoff, einem Zweikomponenten-Polyurethanklebstoff und einem druckempfindlichen Klebstoff besteht.

4. Korrosionsschutzfilm nach einem der Ansprüche 1 bis 3, wobei die Einkapselungsschicht mindestens ein Polymer umfasst, das aus der Gruppe ausgewählt ist, die aus Polypropylen (PP), Polyamid (PA), Polyethylen (PE) und Polyethylenterephthalat (PET), Polyvinylfluorid (PVF), Polyvinylidenfluorid (PVdF), Polyvinylchlorid (PVC), Polyvinylidenchlorid (PVdC), Poly(methylmethacrylat) (PMMA), Polyethylentetrafluorethylen (ETFE) und Polyethylenchlortrifluorethylen (ECTFE) besteht.

5. Verwendung eines Korrosionsschutzfilms nach einem der Ansprüche 1 bis 4 auf einer Metalloberfläche für den Korrosionsschutz.

## Revendications

1. Film de protection contre la corrosion ayant une structure multicouche capable de se lier de manière adhésive à une surface métallique et d'empêcher les ions corrosifs de corroder ledit substrat métallique et non utilisable pour l'emballage d'aliments, comprenant une couche adhésive, une couche barrière contre la corrosion comprenant un matériau polymère, et une couche d'encapsulation, la couche barrière contre la corrosion comprenant un copolymère d'éthylène et d'alcool vinylique (EVOH), et la couche barrière contre la corrosion ayant une épaisseur dans la plage de 1 µm à 8 µm.

2. Film de protection contre la corrosion selon la revendication 1, dans lequel une couche de liaison est agencé entre la couche adhésive et la couche barrière contre la corrosion et/ou entre la couche barrière contre la corrosion et la couche d'encapsulation.

3. Film de protection contre la corrosion selon l'une quelconque des revendications 1 et 2, dans lequel la couche adhésive comprend au moins un adhésif choisi dans le groupe constitué par un copolymère d'éthylène et d'acide acrylique (EAA), un copolymère d'éthylène et d'acide méthacrylique (EMAA), un copolymère d'éthylène et d'acétate de vinyle (EVA), un ionomère, un adhésif époxy, un adhésif au polyuréthane bicomposant, et un adhésif auto-adhésif.

4. Film de protection contre la corrosion selon l'une quelconque des revendications 1 à 3, dans lequel la couche d'encapsulation comprend au moins un polymère choisi dans le groupe constitué par le polypropylène (PP), le polyamide (PA), le polyéthylène (PE), le polytéréphtalate d'éthylène (PET), le polyfluorure de vinyle (PVF), le polyfluorure de vinylidène (PVdF), le polychlorure de vinyle (PVC), le polychlorure de vinylidène (PVdC), le poly(méthacrylate de méthyle) (PMMA), le polyéthylène tétrafluoroéthylène (ETFE), et le polyéthylène chlorotrifluoroéthylène (ECTFE).

5. Utilisation d'un film de protection contre la corrosion selon l'une quelconque des revendications 1 à 4 sur une surface métallique pour une protection contre la corrosion.
